Europäisches Patentamt

European Patent Office

Office européen des brevets

(11) Veröffentlichungsnummer: **0 395 925**
**A1**

(12) **EUROPÄISCHE PATENTANMELDUNG**

(21) Anmeldenummer: **90107159.7**

(22) Anmeldetag: **14.04.90**

(51) Int. Cl.5: **C01F 7/30, C09K 3/14**

(30) Priorität: **19.04.89 DE 3912842**
**23.03.90 DE 4009299**

(43) Veröffentlichungstag der Anmeldung:
**07.11.90 Patentblatt 90/45**

(84) Benannte Vertragsstaaten:
**AT BE DE DK ES FR GB IT NL SE**

(71) Anmelder: **Degussa Aktiengesellschaft**
**Weissfrauenstrasse 9**
**D-6000 Frankfurt am Main 1(DE)**

(72) Erfinder: **Sextl, Gerhard, Dr.**
**Am Frohnbügel 11**
**D-8752 Geiselbach(DE)**
Erfinder: **Swarowsky, Herbert, Dr.**
**Zum Taubengarten 14 a**
**D-6460 Gelnhausen(DE)**
Erfinder: **Körfer, Martin**
**Hausmannstrasse 1**
**D-6450 Hanau(DE)**
Erfinder: **Kleinschmit, Peter, Dr.**
**Wildaustrasse 19**
**D-6450 Hanau 9(DE)**
Erfinder: **Schwarz, Rudolf, Dr.**
**Taunusstrasse 2**
**D-8755 Wasserlos(DE)**

(54) **Alpha-Aluminiumoxid und Verfahren zu seiner Herstellung.**

(57) $\alpha$-Aluminiumoxid mit einem $\alpha$-Aluminiumoxidgehalt von 20 bis 80 Gew.-% mit einer spezifischen Oberfläche nach BET (DIN 66 131) von 5 bis 40 m$^2$/g, nahezu isoliert vorliegenden Primärteilchen und einer Primärteilchenverteilung von ca. 20 bis 500 Nanometer, wird auf pyrogenem Wege hergestellt, indem man Aluminiumtrichlorid verdampft, mit einem Trägergas vermischt, dieses Gemisch in einer Sauerstoff/Brenngas-Flamme in ein Flammrohr verbrennt, in dem Flammrohr eine Temperatur von 1200 bis 1500 °C einhält oder bis auf 1700 °C erhöht und die Reaktionsabgase und das entstandene Produkt durch eine Kühlstrecke bekannter Bauart hindurchleitet und das Produkt auf bekannte Weise von den Reaktionsabgasen abtrennt.

Fig. 1

EP 0 395 925 A1

## α-Aluminiumoxid und Verfahren zu seiner Herstellung

Die Erfindung betrifft α-Aluminiumoxid sowie das Verfahren zu seiner Herstellung.

α-Aluminiumoxid ist ein bekanntes Handelsprodukt. Es weist gröbere Partikel mit Durchmessern von mehreren Mikrometern und eine niedrige spezifische Oberfläche von ≦ 15 m²/g auf.

Das bekannte α-Aluminiumoxid hat den Nachteil, daß es für manche Anwendungszwecke, wie zum Beispiel Polieren von empfindlichen Oberflächen oder elektronischen Verpackungen, zu grobkörnig ist.

In der älteren Anmeldung gemäß DE 38 27 898 wird beschrieben, wie man ein feinteiliges α-Aluminiumoxid durch thermische Nachbehandlung von α-Aluminiumoxid herstellen kann.

Eine direkte Synthese von α-Aluminiumoxid auf pyrogenem Wege ist nicht bekannt.

Gegenstand der Erfindung ist ein u-Aluminiumoxid, welches gekennzeichnet ist durch einen α-Aluminiumoxidgehalt von 20 bis 80 Gew.-%, eine spezifische Oberfläche nach BET (DIN 66 131) von 5 bis 40 m²/g, nahezu isoliert vorliegenden Primärteilchen und einer Primärteilchenverteilung von ca. 20 bis 500 Nanometer.

Das erfindungsgemäße α-Aluminiumoxid kann die folgende Zusammensetzung haben:

20 bis 80 Gew.-% kristallines a-Aluminiumoxid

10 bis 50 Gew.-% Delta-Aluminiumoxid

10 bis 30 Gew.-% θ-Aluminiumoxid

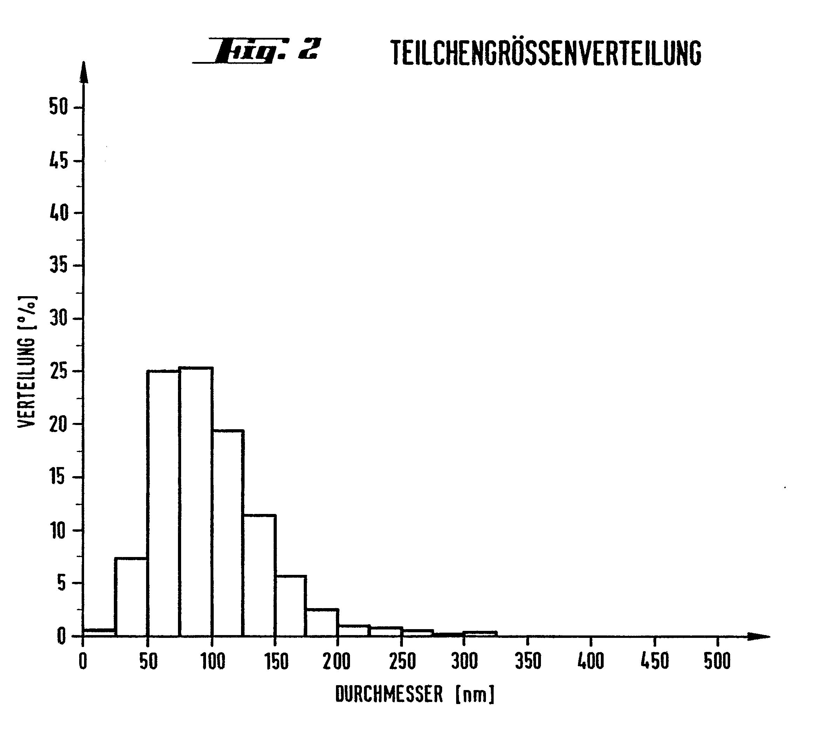

In einer bevorzugten Ausführungsform der Erfindung kann das α-aluminiumoxid die Primärteilchenverteilung gemäß Figur 2 aufweisen.

Das erfindungsgemäße α-Aluminiumoxid kann aufgrund seiner Teilchenfeinheit als Poliermittel für empfindliche Oberflächen, wie zum Beispiel bei Kontaktlinsen oder bei sogenannten Memory-Discs (Festspeicherplatten) in Computern, eingesetzt werden.

Ein weiterer Gegenstand der Erfindung ist ein Verfahren zur pyrogenen Herstellung des α-Aluminiumoxides mit einem α-Aluminiumoxidgehalt von 20 bis 80 Gew.-%, mit einer spezifischen Oberfläche nach BET (DIN 66 131) von 5 bis 40 m²/g, nahezu isoliert vorliegenden Primärteilchen und einer Primärteilchenverteilung von ca. 20 bis 500 Nanometer, welches dadurch gekennzeichnet ist, daß man Aluminiumtrichlorid verdampft, mit einem Inert-Trägergas vermischt, durch ein auf eine Temperatur von über 250 °C beheiztes Rohr leitet, unmittelbar vor einem Brenner mit einem Brenngas in einer Mischkammer vermischt, die Mischung dem Brenner zuführt und in einem Flammenrohr verbrennt, dabei in dem Flammrohr eine Temperatur von 1200 bis 1500 °C, vorzugsweise von 1200 bis 1300 °C einhält oder gegebenenfalls bis auf 1700 °C erhöht, im Anschluß an das Flammrohr die Reaktionsabgase und das entstandene Produkt durch eine Kühlstrecke bekannter Bauart hindurchleitet und das Produkt auf bekannte Weise von den Reaktionsgasen abtrennt.

Eine derartige Kühlstrecke und Abtrennmethode werden bei der pyrogenen Herstellung von Metalloid bzw. Metalloxiden verwendet (vgl. Ullmanns Encyklopädie der technischen Chemie, 4. Auflage, Band 21, S. 464).

Als Brenngas kann man Wasserstoff oder Kohlenmonoxid einsetzen, wobei Kohlenmonoxid bevorzugt wird.

Als Inertträgergas kann man Stickstoff oder Argon oder andere Edelgase einsetzen.

Als Brenner kann ein System aus drei koaxialen Rohren verwendet werden, durch deren mittleres Rohr das verdampfte Aluminiumtrichlorid im Gemisch mit dem Brenngas geführt wird, während durch das mittlere Rohr Sauerstoff und durch das äußere Rohr weiteres Brenngas geführt wird.

Als Flammrohr kann man ein Stahlrohr verwenden, welches innen mit Aluminiumoxid-Zement ausgegossen ist.

Die Temperatur in dem Flammrohr kann man mittels Nachbrennern, die aus ringförmig in dem Flammrohr angeordneten Düsen bzw. Ringdüsen bestehen, durch die zusätzliches Brenngas eingeführt wird, in dem Bereich von 1200 bis 1500 °C aufrechterhält oder bis auf 1700 °C erhöht.

In dem Flammrohr kann man 1 bis 4 ringförmig angeordnete Düsen oder Ringdüsen anordnen.

Das erfindungsgemäße Verfahren weist den Vorteil auf, daß er die direkte Synthese von α-Aluminiumoxid auf AlCl₃ mit einer feinen Teilchenverteilung ermöglicht.

Die Primärteilchen des Produktes liegen nahezu isoliert vor und weisen eine Verteilung von ca 20 bis 500 Nanometer auf.

Das erfindungsgemäße verfahren bzw. erfindungsgemäß eingesetzte Flammrohr wird in der Zeichnung erläutert.

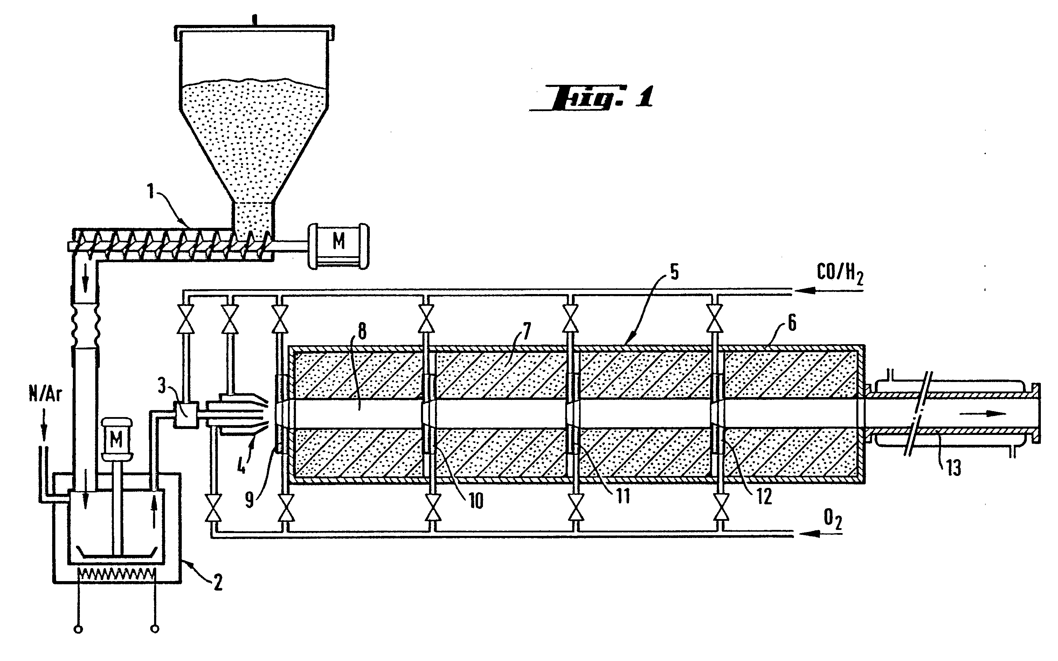

Gemäß Figur 1 wird festes Aluminiumtrichlorid über die Dosieranlage 1 der Verdampfungsanlage 2 zugeführt. Das verdampfte Aluminiumtrichlorid wird in der Mischkammer 3 mit dem Brenngas vermischt und in den Brenner 4, der aus drei konzentrisch angeordneten Röhren besteht, geführt. Die Flamme strömt bei der Verbrennung des Gemisches in der durch Sauerstoff und weiterem Brenngas gespeisten Flamme in das Flammrohr 5.

Das Flammrohr 5 besteht aus dem Stahlmantel 6, welches mit Aluminiumoxid-Zement 7 derart ausgegossen ist, daß eine konzentrische Röhre 8 gebildet wird.

In dem Flammrohr 5 sind in vorgegebenen Abständen die Ringdüsen 9, 10, 11 und 12 angeordnet, über die zusätzliches Brenngas in die konzentrische Röhre 8 des Flammrohres 5 eingeleitet wird.

Die Reaktionsabgase sowie das Produkt werden durch die Kühlstrecke 13 geführt.

Beispiel:

In einem Verdampfer werden 1 kg/h $AlCl_3$ verdampft und mit 300 l/h Stickstoff zum Brenner gefördert. Das $AlCl_3$ wird im Brennerkern mit 2 $m^3$/h Kohlenmonoxid vorgemischt. Im 1. Mantel werden 1,5 $m^3$/h Sauerstoff, in einem 2. Mantel nochmals 1 $m^3$/h Kohlenmonoxid in die Flamme eingespeist. Die Reaktionsflamme brennt in ein Flammrohr gemäß Figur 1. Durch die Einleitung weiteren Brenngases und Sauerstoffs durch die Ringdüsen 9, 10 und 11 wird das Flammrohr auf einem Temperaturniveau von 1200 bis 1400 °C gehalten.

Das Gas-Feststoffgemisch wird in einer Kühlstrecke bekannter Bauart abgekühlt und der Feststoff mittels Filtration oder Zyklon abgetrennt. Die Ausbeute beträgt 0,38 kg $Al_2O_3$ pro Stunde. Man erhält ein Aluminiumoxid mit einer BET-Oberfläche (DIN 66 131) von 21 $m^2$/g und folgender Phasenverteilung:

ca. 70 % - α-Aluminiumoxid

ca. 20 % - δ-Aluminiumoxid

ca. 10 % - θ-Aluminiumoxid

kein gamma- und amorphes Aluminiumoxid

Die Größe der Primärteilchen liegt vorzugsweise im Bereich von 50 bis 200 nm.

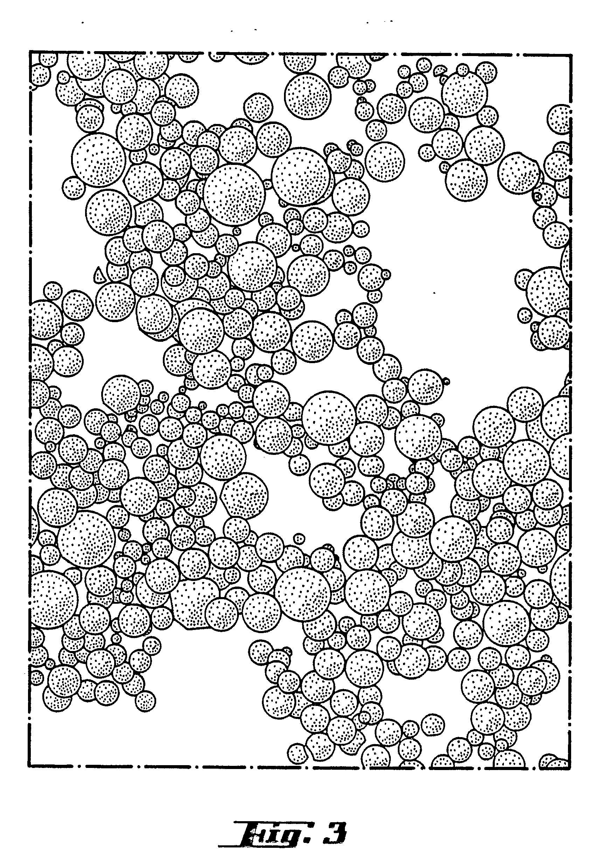

Die elektronenmikroskopische Aufnahme (TEM) gemäß Figur 3 zeigt nahezu ausschließlich isoliert vorliegende, d. h., nicht aggregierte sphärische Primärteilchen. Diese Primärteilchen weisen - gemessen mit dem Cilas-Granulometer - die folgende Teilchengrößenverteilung auf:

Gesamtteilchenzahl (N) 2059

Teilchendurchmesser, Arithm. Mittel (DN) 104,54 (NM)

Teilchendurchmesser, über Oberfl. gemittelt (DA) 146,45 (NM)

| Prozentuale Verteilung | | | | |
|---|---|---|---|---|
| Durchmesser | Anzahl | Anzahl % | Summe Anzahl % | Summe Gewichts % |
| D (NM) | N | N % | SN % | SND3 % |
| 29,780 | 15 | 0,729 | 0,729 | 0,010 |
| 40,820 | 43 | 2,083 | 2,817 | 0,086 |
| 51,860 | 123 | 5,974 | 8,791 | 0,529 |
| 62,900 | 199 | 9,665 | 18,456 | 1,808 |
| 73,940 | 276 | 13,405 | 31,860 | 4,689 |
| 84,980 | 216 | 10,491 | 42,351 | 8,113 |
| 96,020 | 251 | 12,190 | 54,541 | 13,852 |
| 107,060 | 212 | 10,296 | 64,837 | 20,571 |
| 118,100 | 181 | 8,791 | 73,628 | 28,271 |
| 129,140 | 138 | 6,702 | 80,330 | 35,947 |
| 140,180 | 118 | 5,731 | 86,061 | 44,341 |
| 151,220 | 76 | 3,691 | 89,752 | 51,129 |
| 162,260 | 54 | 2,623 | 92,375 | 57,087 |
| 173,300 | 51 | 2,477 | 94,852 | 63,942 |
| 184,340 | 29 | 1,408 | 96,260 | 68,634 |
| 195,380 | 18 | 0,874 | 97,135 | 72,101 |
| 206,420 | 15 | 0,729 | 97,863 | 75,509 |
| 217,460 | 5 | 0,243 | 98,106 | 76,837 |
| 228,500 | 6 | 0,291 | 98,397 | 78,685 |
| 239,540 | 7 | 0,340 | 98,737 | 81,170 |
| 250,580 | 5 | 0,243 | 98,980 | 83,202 |
| 261,620 | 2 | 0,097 | 99,077 | 84,127 |
| 272,660 | 7 | 0,340 | 99,417 | 87,792 |
| 283,700 | 2 | 0,097 | 99,514 | 88,971 |
| 294,740 | 1 | 0,049 | 99,563 | 89,632 |
| 305,780 | 2 | 0,097 | 99,660 | 91,109 |
| 316,820 | 2 | 0,097 | 99,757 | 92,752 |
| 327,860 | 2 | 0,097 | 99,854 | 94,572 |
| 338,900 | 1 | 0,049 | 99,903 | 95,577 |
| 405,140 | 1 | 0,049 | 99,951 | 97,295 |
| 471,380 | 1 | 0,049 | 100,000 | 100,000 |

**Ansprüche**

1. α-Aluminiumoxid, gekennzeichnet durch einen α-Aluminiumoxidgehalt von 20 bis 80 Gew.-%, eine spezifische Oberfläche nach BET (DIN 66 131) von 5 bis 40 m²/g, nahezu isoliert vorliegenden Primärteilchen und einer Primärteilchenverteilung von ca. 20 bis 500 Nanometer.

2. Verfahren zur pyrogenen Herstellung von α-Aluminiumoxid mit einem α-Aluminiumoxidgehalt von 20 bis 80 Gew.-%, mit einer spezifischen Oberfläche nach BET (DIN 66 131) von 5 bis 40 m²/g, nahezu isoliert vorliegenden Primärteilchen und einer Primärteilchenverteilung von ca. 20 bis 500 Nanometer, dadurch gekennzeichnet, daß man Aluminiumtrichlorid verdampft, mit einem Inertgas-Trägerstrom vermischt, durch ein auf eine Temperatur von über 250 °C beheiztes Rohr leitet, unmittelbar vor einem Brenner mit einem Brenngas in einer Mischkammer vermischt, die Mischung dem Brenner zuführt und in ein Flammrohr verbrennt, dabei in dem Flammrohr eine Temperatur von 1200 bis 1500 °C, vorzugsweise von 1200 bis 1300 °C einhält oder gegebenenfalls bis auf 1700 °C erhöht, im Anschluß an das Flammrohr die Reaktionsabgase und das entstandene Produkt durch eine Kühlstrecke bekannter Bauart hindurchleitet und das Produkt auf bekannte Weise von den Reaktionsabgasen abtrennt.

3. Verfahren nach Anspruch 2, dadurch gekennzeichnet, daß man als Brenngas Kohlenmonoxid verwendet.

4. Verfahren nach Anspruch 2 oder 3, dadurch gekennzeichnet, daß als Brenner ein System aus drei koaxialen Rohren verwendet, durch deren mittleres Rohr das verdampfte Aluminiumtrichlorid im Gemisch mit dem Brenngas geführt wird, während durch das mittlere Rohr Sauerstoff und durch das äußere Rohr weiteres Brenngas geführt wird.

5. Verfahren nach Anspruch 2 bis 4, dadurch gekennzeichnet, daß man als Flammrohr ein Stahlrohr verwendet, welches innen mit Aluminiumoxid-Zement ausgegossen ist.

6. Verfahren nach Anspruch 2 bis 5, dadurch gekennzeichnet, daß man die Temperatur in dem Flammrohr mittels Nachbrennern, die jeweils aus ringförmig in dem Flammrohr angeordneten Düsen bzw. Ringdüsen bestehen, durch die zusätzliches Brenngas eingeführt wird, in dem Bereich von 1200 bis 1500 °C aufrechterhält oder gegebenenfalls bis 1700 °C erhöht.

7. Verfahren nach Anspruch 6, dadurch gekennzeichnet, daß man in dem Flammrohr 1 bis 4 ringförmig angeordnete Düsen oder Ringdüsen angeordnet hat.

Fig. 1

EP 0 395 925 A1

**Fig: 2**     TEILCHENGRÖSSENVERTEILUNG

EP 0 395 925 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | GB-A-2184715 (LAPORTE IND.)<br>* Seite 4, Zeilen 49 - 55; Anspruch 13 *<br>--- | 1 | C01F7/30<br>C09K3/14 |
| P,X | EP-A-318102 (PHILIPS PATENTVERWALTUNG)<br>* das ganze Dokument *<br>--- | 1, 2 | |
| A | DE-C-947788 (SAUREFABRIK SCHWEIZERHALL)<br>* Seite 2, Zeilen 46 - 57 * | 2 | |
| A | * Seite 3, Zeilen 78 - 82 * | 3 | |
| A | * Figur 5 *<br>--- | 4 | |
| A | FR-A-1054385 (SAUREFABRIK SCHWEIZERHALL)<br>* Figuren *<br>--- | 4 | |
| A | DE-A-2060613 (BAYER)<br>* Ansprüche 1, 3 *<br>--- | 5 | |
| A | GB-A-1145344 (FABR. PROD. CHIM. DE THAN ET DE MULHOUSE)<br>--- | | |
| A | US-A-3235332 (WOODHALL)<br>----- | | **RECHERCHIERTE SACHGEBIETE (Int. Cl.5 )**<br><br>C01F |

Der vorliegende Recherchenbericht wurde für alle Patentansprüche erstellt

| Recherchenort | Abschlußdatum der Recherche | Prüfer |
|---|---|---|
| DEN HAAG | 21 AUGUST 1990 | ZALM W.E. |